# EUROPÄISCHE PATENTSCHRIFT

(11) **EP 4 109 070 B1**
(45) Veröffentlichungstag und Bekanntmachung des Hinweises auf die Patenterteilung: **06.12.2023**
(21) Anmeldenummer: 21181538.6
(22) Anmeldetag: 24.06.2021
(51) Int. Cl.: G01N 3/04

(54) **PRÜFMASCHINEN-EINSPANNKOPF, PRÜFMASCHINE UND VERFAHREN ZUM PRÜFEN**
TESTING MACHINE CLAMPING HEAD, TESTING MACHINE AND TESTING METHOD
TÊTE DE SERRAGE POUR MACHINE D'ESSAI, MACHINE D'ESSAI ET PROCÉDÉ D'ESSAI

(43) Veröffentlichungstag der Anmeldung: 28.12.2022
(73) Patentinhaber: Henze, Sven, 38678 Clausthal-Zellerfeld (DE)
(72) Erfinder: Henze, Sven, 38678 Clausthal-Zellerfeld (DE)
(74) Vertreter: REHBERG HÜPPE + PARTNER

(56) Entgegenhaltungen:
- EP-A1- 0 257 104
- EP-B1- 0 101 508
- US-A- 5 581 040

## Beschreibung

### TECHNISCHES GEBIET DER ERFINDUNG

Die Erfindung betrifft das technische Gebiet von Prüfmaschinen, mittels dessen eine statische und/oder dynamische Prüfung einer Probe erfolgen kann. Bei der statischen und/oder dynamischen Prüflast, mit welcher die Probe in der Prüfmaschine beauftragt wird, kann es sich um eine beliebige Kraft, ein beliebiges Moment oder auch eine Überlagerung von Kräften und/oder Momenten handeln, wobei die statische und/oder dynamische Prüflast vorzugsweise eine Zug- und/oder Druckkraft ist, die in Richtung der Längsachse der Probe wirkt. Hierbei betrifft die Erfindung auch einen Prüfmaschinen-Einspannkopf, mittels dessen ein Einspannen der Probe in der Prüfmaschine erfolgt und eine Übertragung der Prüflast auf die Probe und die Einleitung der Prüflast in die Probe erfolgt. Des Weiteren betrifft die Erfindung ein Verfahren zum Prüfen einer Probe mit der statischen und/oder dynamischen Prüflast mittels einer Prüfmaschine.

### STAND DER TECHNIK

Aus der Druckschrift EP 010 150 8 B1 ist eine Prüfmaschine für eine Zug-Druck-Prüfung einer Probe bekannt. Hierbei wird die Probe, bei der es sich um eine Stahlplatte handelt, endseitig in Prüfmaschinen-Einspannköpfen eingespannt. Eine Betätigung der Spannbacken erfolgt über eine hydraulische Beaufschlagung einer Kolbenfläche, die wiederum über Keilflächen Spannbacken betätigt.

### AUFGABE DER ERFINDUNG

Der Erfindung liegt die Aufgabe zugrunde, einen Prüfmaschinen-Einspannkopf vorzuschlagen, der insbesondere hinsichtlich
- der Gewährleistung eines zuverlässigen Einspannens der Probe,
- einer Reduzierung des Verschleißes der Bauelemente und/oder
- des Betriebs der Prüfmaschine
verbessert ist. Des Weiteren liegt der Erfindung die Aufgabe zugrunde, einen entsprechend verbesserten Prüfmaschinen-Einspannkopf und ein entsprechend verbessertes Verfahren zum Prüfen einer Probe mit einer statischen und/oder dynamischen Prüflast mittels einer Prüfmaschine vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt einen Prüfmaschinen-Einspannkopf vor, der Einsatz findet zum Einspannen einer Probe, die in einer Prüfmaschine mit einer statischen und/oder einer dynamischen Prüflast beaufschlagt wird. Der Prüfmaschinen-Einspannkopf verfügt über mindestens zwei Spannbacken, zwischen denen die zu prüfende Probe mit einer Einspannkraft eingespannt wird. Die Einspannkraft wird mittels einer hydraulischen Spanneinrichtung auf Grundlage eines Hydraulikdrucks erzeugt.

Der vorliegenden Erfindung liegt insbesondere die Erkenntnis zugrunde, dass für bekannte Prüfmaschinen-Einspannköpfe die Spannkraft mittels des Hydraulikdrucks aufgebaut wird und die derart aufgebaute Spannkraft auch durch Aufrechterhaltung des Hydraulikdrucks während der Durchführung der Prüfung der Probe, also während des Wirkens der statischen und/oder dynamischen Prüflast aufrecht erhalten werden muss. Der Erfindung liegt die Erkenntnis zugrunde, dass dies nachteilhaft sein kann. So ist für diese Ausführungsformen die von den Spannbacken gebildete Aufnahme über das Hydraulikfluid in einer Druckkammer abgestützt, was zur Folge hat, dass je nach Kompressibilität des Hydraulikfluids, insbesondere infolge von in dem Hydraulikfluid aufgenommener Luft, eine unerwünschte federnde Abstützung der Spannbacken erfolgt. Des Weiteren ist die Aufrechterhaltung des Hydraulikdrucks und damit die Aufrechterhaltung der gewünschten Spannkraft abhängig von der Dichtwirkung der Dichtungen, mit denen die mit dem Hydraulikdruck beaufschlagte Druckkammer abgedichtet ist. Kommt es hier beispielsweise betriebsbedingt, alterungsbedingt, verschließbedingt und/oder infolge einer wirkenden statischen oder dynamischen Prüflast zu einer Leckage, weicht die tatsächliche Spannkraft von der gewünschten Spannkraft ab, was zu einer unerwünschten Beeinträchtigung der Prüfbedingungen führen kann. Schließlich können kleine Relativbewegungen der Dichtungen und Bauelemente insbesondere bei dynamischen Prüfbedingungen bei gleichzeitig wirkenden Hydraulikdrücken zu einem unerwünschten Verschleiß führen.

Auf Grundlage dieser Erkenntnis schlägt die Erfindung vor, dass zusätzlich zu der hydraulischen Spanneinrichtung in dem erfindungsgemäßen Prüfmaschinen-Einspannkopf eine mechanische Sicherungseinrichtung vorhanden ist. Mittels der mechanischen Sicherungseinrichtung wird die Spannkraft zumindest teilweise (insbesondere vollständig, zu mehr als 95 %, mehr als 90 %, mehr als 85 % oder mehr als 80 %) aufrecht erhalten, wenn der Hydraulikdruck in der hydraulischen Spanneinrichtung reduziert wird oder vollständig beseitigt wird (was durch gezielte Druckreduzierung oder -beseitigung in der Druckkammer oder durch eine Leckage erfolgen kann). Für den erfindungsgemäßen Prüfmaschinen-Einspannkopf erfolgt somit eine funktionale Aufteilung derart, dass zunächst mittels der hydraulischen Spanneinrichtung die Spannkraft erzeugt und aufgebaut wird, während dann mittels der mechanischen Sicherungseinrichtung die Spannkraft aufrechterhalten wird. Die erfindungsgemäße Ausgestaltung ermöglicht, dass vor der Beaufschlagung der Probe mit der Prüflast mittels der hydraulischen Spanneinrichtung die Spannkraft erzeugt wird und das hieran anschließend während der Beaufschlagung der Probe mit der Prüflast der Hydraulikdruck nicht mehr erforderlich ist und stattdessen die mechanische Sicherungseinrichtung die Spannkraft aufrecht erhält. Dies kann zu einer Vereinfachung der Durchführung der Prüfung führen, da während der Beaufschlagung der Probe mit der Prüflast nicht die Aufrechterhaltung des Hydraulikdrucks erfolgen muss. Während der Durchführung der Prüfung sind auch die Dichtungen nicht mit dem Hydraulikdruck beaufschlagt, sodass es nicht zu einer unerwünschten Leckage kommen kann und/oder keine übermäßige Beanspruchung der Dichtungen einerseits infolge der wirkenden Prüflast und andererseits infolge des Hydraulikdrucks kommt. Die mechanische Sicherungseinrichtung kann dabei zumindest einseitig in Richtung der wirkenden Spannkraft eine Position eines Kolbens oder Aktuatorkörpers sichern, womit dann unmittelbar oder mittelbar auch die Spannstellung der Spannbacken und die in der Spannstellung der Spannbacken erzeugte Spannkraft aufrechterhalten werden. Auf diese Weise können auch etwaige störende Relativbewegungen der Bauelemente und ein etwaiger hiermit einhergehender Verschleiß zumindest reduziert werden.

Grundsätzlich kann die hydraulische Spanneinrichtung beliebig ausgebildet sein, wozu auf derartige hydraulische Spanneinrichtungen für Prüfmaschinen-Einspannköpfe, wie diese aus dem Stand der Technik bekannt sind, verwiesen wird. Für einen besonderen Vorschlag der Erfindung verfügen die Spannbacken über Außenkeilflächen. Ein Aktuatorkörper, der von dem Hydraulikdruck betätigt ist und beispielsweise eine von dem Hydraulikdruck gekoppelte Kolbenfläche aufweisen kann oder der von einem entsprechenden Kolben betätigt ist, weist Innenkeilflächen auf. Hierbei liegen die Außenkeilflächen der Spannbacken jeweils an einer zugeordneten Innenkeilfläche des Aktuatorkörpers an. In einer derart gebildeten Keilverbindung führt die von dem Hydraulikdruck erzeugte Betätigungskraft zu einer gleitenden Relativbewegung zwischen den Außenkeilflächen und den Innenkeilflächen, wobei eine Kraftübersetzung zwischen der an dem Kolben erzeugten Betätigungskraft und der an den Spannbacken wirkenden Spannkraft entsprechend dem gewählten Keilwinkel und den Reibbedingungen erfolgen kann. Die genannte gleitende Relativbewegung führt zu einer Verringerung des Abstandes von Spannflächen der Spannbacken. Alternativ oder zusätzlich kann es zu einer Erhöhung der Spannkraft, mit der die Spannflächen der Spannbacken an die Probe gepresst werden, kommen. Die gleitende Relativbewegung hat somit ein Herbeiführen des Einspannens der Probe zur Folge. Die Außenkeilflächen und/oder die Innenkeilflächen können eben ausgebildet sein, womit sich über die gleitenden Relativbewegung der wirksame Keilwinkel nicht ändert. Durchaus möglich ist aber auch eine gekrümmte Ausbildung mindestens einer der genannten Keilflächen, womit sich ein veränderlicher Keilwinkel mit der gleitenden Relativbewegung und damit einhergehend ein verändertes Übersetzungsverhältnis zwischen der Betätigungskraft und der Spannkraft ergibt.

Grundsätzlich sind im Rahmen der Erfindung beliebige technische Lösungen für die Rückführung des Aktuatorkörpers und/oder der Spannbacken von einer Spannstellung in eine Lösestellung Einsatz möglich, vgl. die diesbezüglich aus dem Stand der Technik bekannten Lösungen. Für einen besonderen Vorschlag der Erfindung ist der Aktuatorkörper über mindestens eine Feder in Richtung einer Lösestellung beaufschlagt. Wird zum Entnehmen der Probe aus dem Prüfmaschinen-Einspannkopf bei bereits reduziertem oder beseitigtem Hydraulikdruck die mechanische Sicherungseinrichtung gelöst, kann die Feder den Aktuatorkörper in die Lösestellung bewegen, womit die Keilverbindung gelöst wird und die Spannbacken geöffnet werden können.

Für einen Vorschlag der Erfindung weist die hydraulische Spanneinrichtung eine Druckkammer auf. Die Druckkammer ist begrenzt von einer Kolbenfläche des Aktuatorkörpers und einem Stator, der von dem Gehäuse des Prüfmaschinen-Einspannkopfes gebildet ist oder hieran befestigt ist. Der Aktuatorkörper ist relativ zu dem Stator beweglich. Hierbei führt eine Bewegung des Aktuatorkörpers relativ zu dem Stator zu einer Veränderung des Volumens der Druckkammer.

Für die geometrische Gestaltung des Stators und/oder des Aktuatorkörpers gibt es im Rahmen der Erfindung vielfältige Möglichkeiten. Für einen besonderen Vorschlag weist der Stator einen T-förmigen (Teil-) Längsschnitt auf, wobei das T einen Vertikalschenkel sowie zwei Querschenkel aufweist. Der Aktuatorkörper weist einen U-förmigen (Teil-) Längsschnitt auf, wobei das U einen Grundschenkel und zwei Seitenschenkel aufweist. Der Vertikalschenkel des T ist unter Abdichtung in einer Bohrung des Grundschenkels des U beweglich geführt. Die außen liegenden Stirnseiten der Querschenkel des T sind unter Abdichtung beweglich durch die Seitenschenkel des U geführt. Die Druckkammer ist dann hohlzylindrisch ausgebildet. In diesem Fall ist die Drucckammer radial innen durch eine zylindrische Mantelfläche des Vertikalschenkels des T, radial außen durch eine zylindrische Mantelfläche, die durch die Seitenschenkel des U definiert ist, in eine axiale Richtung durch eine Kolbenfläche, die von dem Grundschenkel des U definiert ist, und in die andere axiale Richtung durch eine Ringfläche, die durch die Querschenkel des T definiert ist, begrenzt.

Grundsätzlich kann der Aktuatorkörper ein- oder mehrteilig ausgebildet sein. Für eine mögliche Ausführungsform weist der Aktuatorkörper einen Kolbenkörper, der die Kolbenfläche ausbildet, die von dem Hydraulikdruck beaufschlagt ist, und einen Spannkörper, der Bestandteil der Keilverbindung zur Betätigung der Spannbacken ist, auf. Der Kolbenkörper und der Spannkörper sind fest miteinander verbunden, insbesondere verschraubt. Eine Ausbildung des Aktuators mit dem Kolbenkörper und dem Spannkörper ist insbesondere vorteilhaft für die Montage des Prüfmaschinen-Einspannkopfes.

Des Weiteren wird eine Ausführungsform des Prüfmaschinen-Einspannkopfes vorgeschlagen, bei der der Aktuatorkörper in einem Halblängsschnitt die Querschenkel des T des Gehäusekörpers U-förmig umgreift.

Erfindungsgemäß wird auch vorgeschlagen, dass die Spannbacken in Richtung der Längsachse über einen Gleitkörper an dem Gehäuseteil abgestützt sind. Erfolgt eine Bewegung der Spannbacken zum Spannen der Probe, gleiten die Spannbacken (vorzugsweise mit einer quer zur Längsachse orientierten Kontaktfläche) an dem Gleitkörper entlang, sodass die Spannbewegung der Spannbacken einerseits durch die Keilverbindung und andererseits durch den Gleitkörper geführt ist.

Für eine mögliche Ausgestaltung weist der Gleitkörper mindestens einen Permanentmagneten auf. Mittels des Permanentmagneten können Magnetkräfte erzeugt werden, über welche der Gleitkörper an dem Gehäuseteil gehalten ist und/oder die Spannbacken unter Ermöglichung der Gleitbewegung an dem Gleitkörper gehalten sind.

Für den Fall, dass eine Ausrichtung der Aufnahme erforderlich ist, um die Endbereiche der Probe aufzunehmen, kann der Aktuatorkörper und/oder können die Spannbacken mindestens ein Ausrichtelement aufweisen. Durch Wechselwirkung oder Eingriff eines Werkzeugs mit oder in das Ausrichtelement kann eine Ausrichtung erfolgen, bei welcher zum Ausrichten vorzugsweise eine Verdrehung des Aktuatorkörpers und/oder der Spannbacken um die Längsachse erfolgt.

Für die mechanische Sicherungseinrichtung kann eine beliebige Ausgestaltung Einsatz finden, solange diese eine axiale Stellung des Aktuatorkörpers und die hierauf wirkende Betätigungskraft und/oder die radiale Stellung der Spannbacken und die Spannkraft, mit der die Spannbacken an die Probe angepresst werden, sichert. Hierbei kann durch die mechanische Sicherungseinrichtung eine beidseitige Sicherung in Löse- und Spannrichtung erfolgen. Vorzugsweise erfolgt diese Sicherung aber nur einseitig, in dem eine Bewegung des Aktuatorkörpers und/oder der Spannbacken in Löserichtung blockiert wird. Die mechanische Sicherungseinrichtung kann beispielsweise als Rastverbindung oder Sperrverbindung, als Verrieglung, Sicherungsstift u. ä. ausgebildet sein. Für einen besonderen Vorschlag der Erfindung weist die mechanische Sicherungseinrichtung eine Sicherungsmutter auf, bei der es sich bspw. um eine Überwurfmutter handeln kann. Die Sicherungsmutter sichert in einer Sicherungs-Schraubstellung eine mittels der hydraulischen Spanneinrichtung herbeigeführte spannende Position eines oder des Aktuatorkörpers oder der Spannbacken. Der Einsatz einer Sicherungsmutter ermöglicht zunächst eine stufenlose Einstellung der Sicherungsposition der Sicherungseinrichtung je nach Schraubwinkel der Sicherungsmutter. Andererseits erfolgt durch das Verschrauben der Sicherungsmutter je nach Steigung des nach Einsatz kommenden Gewindes eine Übersetzung zwischen der Betätigungskraft der Sicherungsmutter und der mechanischen Anpresskraft zur Herbeiführung der Sicherungswirkung.

Grundsätzlich möglich ist, dass die mechanische Sicherungseinrichtung lediglich über die Sicherungsmutter verfügt. Insbesondere für den Fall, dass in der Prüfmaschine auch eine dynamische Prüfung der Probe erfolgt, kann eine zusätzliche Sicherung erforderlich sein, damit nicht im Betrieb die Sicherungsmutter ihre Schraubstellung verändert, womit die Spannkraft verringert werden könnte. Zu diesem Zweck können an sich bekannte Sicherungseinrichtungen für eine Sicherungsmutter zum Einsatz finden. Vorzugsweise ist die Sicherungs-Schraubstellung der Sicherungsmutter über eine Wellen- oder Kontermutter gesichert, die gegen die Sicherungsmutter "gekontert" wird.

Eine weitere Lösung der der Erfindung zugrunde liegenden Aufgabe stellt ein Verfahren zum Prüfen einer Probe mit einer statischen und/oder dynamischen Prüflast mittels einer Prüfmaschine dar, wobei hier zwei Prüfmaschinen-Einspannköpfe Einsatz finden, wie diese zuvor beschrieben worden sind. In den beiden Prüfmaschinen-Einspannköpfen wird jeweils ein Endbereich der Probe eingespannt. Die Prüfmaschine verfügt auch über einen Prüfaktuator, mittels dessen die statische oder dynamische Prüflast erzeugt wird. In dem erfindungsgemäßen Verfahren erfolgt zunächst ein Einführen der Endbereiche der Probe in Aufnahme der Prüfmaschine-Einspannköpfe, wobei dieses Einführen beispielsweise entsprechend den aus dem Stand der Technik bekannten Aufnahmen in Richtung der Längsachse des Prüfmaschinen-Einspannkopfes und der Aufnahme des selben erfolgen kann oder auch in lateraler Richtung (vgl. insbesondere EP 010 150 8 B1). Hieran anschließend wird in dem erfindungsgemäßen Verfahren die hydraulische Spanneinrichtung mit einem Hydraulikdruck beaufschlagt, womit die Spannkraft erzeugt wird, so dass die Spannbacken der Prüfmaschinen-Einspannköpfe die Endbereiche der Probe einspannen. Für noch wirkenden Hydraulikdruck und erzeugte Spannkraft erfolgt dann die Betätigung der mechanischen Sicherungseinrichtung, welche die Spannstellung der Spannbacken mechanisch sichert. Möglich ist, dass hieran anschließend der Hydraulikdruck in der hydraulischen Spanneinrichtung reduziert oder beseitigt wird. Möglich ist aber auch, dass der Hydraulikdruck weiter aufrechterhalten wird, was durch Herbeiführung eines Sperrventils erfolgen kann oder durch weitere Bereitstellung eines Hydraulikdrucks durch eine Druckquelle. Es erfolgt dann nach der Betätigung der mechanischen Sicherungseinrichtung eine Durchführung der Prüfung, indem der Prüfaktuator so betrieben wird, dass die statische und/oder dynamische Prüflast erzeugt wird und über die Prüfmaschinen-Einspannköpfe in die Probe eingeleitet wird. Für den Fall, dass während der Prüfung sowohl die mechanische Sicherungseinrichtung als auch die hydraulische Spanneinrichtung gleichzeitig wirksam sind, ergibt sich eine redundante Sicherung der Spannkraft. Wird hingegen der Hydraulikdruck während der Prüfung zumindest reduziert, erfolgt die Sicherung der Spannkraft ausschließlich über die Sicherungseinrichtung.

Schließlich stellt eine Prüfmaschine mit zwei zuvor erläuterten Prüfmaschinen-Einspannköpfen und einem Prüfaktuator eine weitere Lösung der der Erfindung zugrunde liegenden Aufgabe dar.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Spannbacke die Rede ist, ist dies so zu verstehen, dass genau eine Spannbacke, zwei Spannbacken oder mehr Spannbacken vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer räumlichen Darstellung einen Prüfmaschinen-Einspannkopf.
- **Fig. 2**: zeigt den Prüfmaschinen-Einspannkopf gemäß Fig.1 in einer Draufsicht auf eine Aufnahme.
- **Fig. 3**: zeigt eine Ausrichtung eines Prüfmaschinen-Einspannkopfes gemäß Fig. 1 und 2 als oberen Prüfmaschinen-Einspannkopf in einem Schnitt III-III gemäß Fig. 2.

### FIGURENBESCHREIBUNG

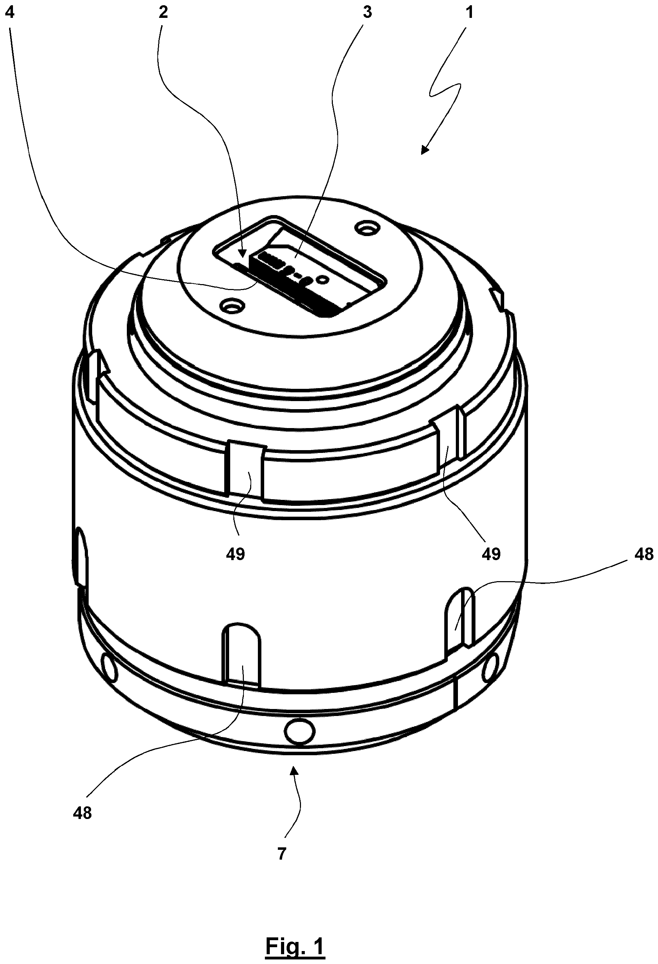

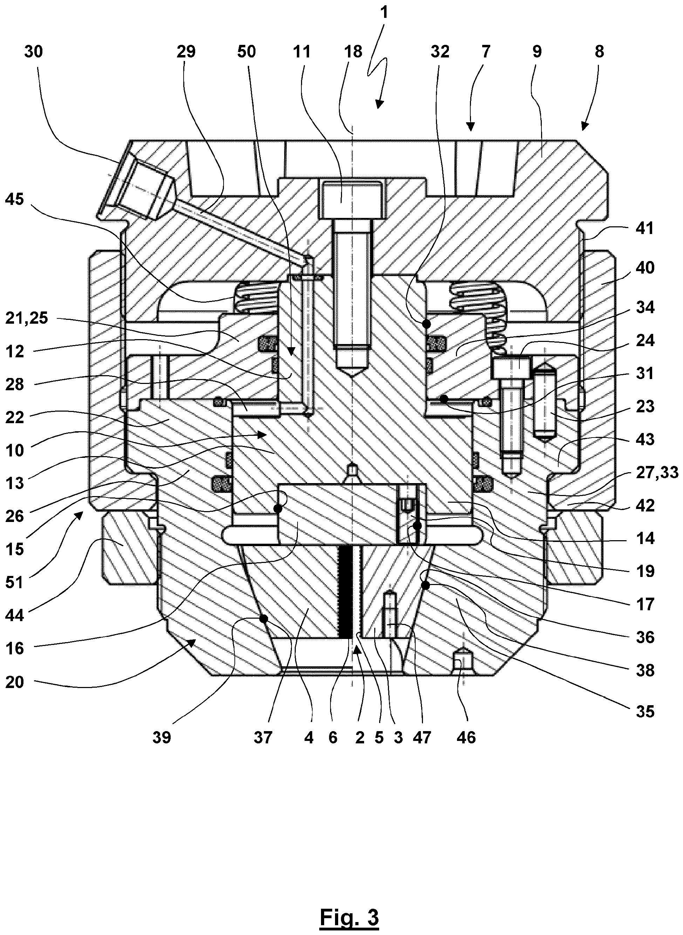

Der in den Figuren dargestellte Prüfmaschinen-Einspannkopf 1 findet Einsatz in einer hier nicht dargestellten Prüfmaschine, die dem Prüfen einer Probe mit einer statischen und/oder dynamischen Prüflast dient. Bei beispielsweise vertikaler Erstreckung der Probe ist unterer Endbereich der Probe in einem Prüfmaschinen-Einspannkopf 1 aufgenommen, der orientiert ist, wie dies in Fig. 1 dargestellt ist, und der obere Endbereich ist in einem Prüfmaschinen-Einspannkopf 1 eingespannt, der entsprechend Fig. 3 orientiert ist. Hierbei können zwei identische Prüfmaschinen-Einspannköpfe 1 Einsatz finden oder diese sind unterschiedlich ausgebildet.

Gemäß **Fig. 1** verfügt der Prüfmaschinen-Einspannkopf 1 über eine Aufnahme 2 für einen Endbereich der Probe. Im Bereich der Aufnahme 2 kann die Probe von (mindestens) zwei Spannbacken 3, 4 zwischen Spannflächen 5, 6 der Spannbacken 3, 4 mit einer Spannkraft eingespannt werden. Auf der der Aufnahme 2 abgewandten Seite bildet der Prüfmaschinen-Einspannkopf 1 einen Befestigungsbereich 7 aus. Im Befestigungsbereich 7 erfolgt eine Befestigung des Prüfmaschinen-Einspannkopf 1 an einem Rahmen der Prüfmaschine oder einem Aktuator zu einer Erzeugung und Übertragung der Prüflast. Der Befestigungsbereich 7 kann beliebig in an sich bekannter Weise ausgebildet sein. Beispielsweise kann der Befestigungsbereich 7 über einen Befestigungsbereich-Lochkreis verfügen, über welchen die Befestigung des Prüfmaschinen-Einspannkopf 1 ermöglicht wird.

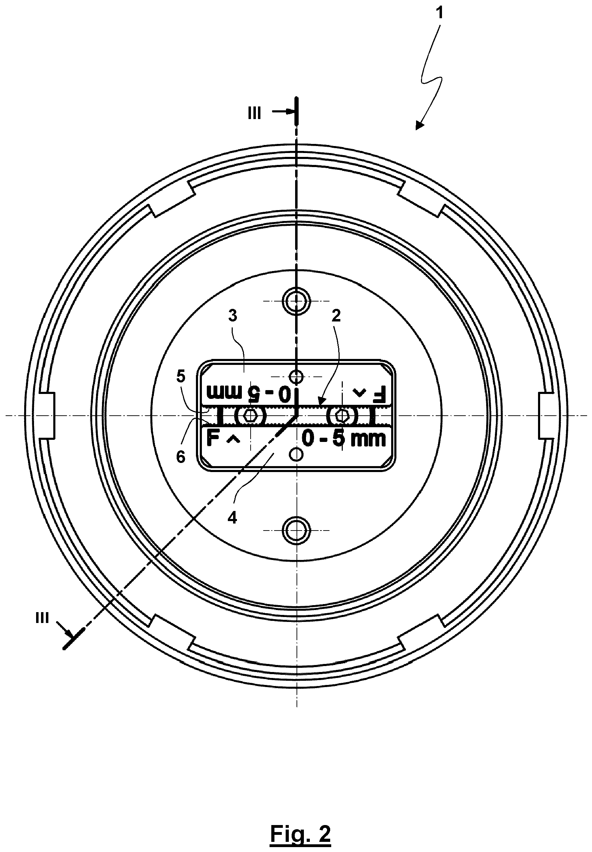

**Fig. 2** zeigt den Prüfmaschinen-Einspannkopf 1 in einer Draufsicht auf die Aufnahme 2 und die Spannbacken 3, 4.

In dem Schnitt III-III gemäß **Fig. 3** ist der Aufbau des Prüfmaschinen-Einspannkopfes 1 dargestellt. Ein Gehäuse 8 verfügt über ein Gehäuseteil 9, welcher den Befestigungsbereich 7 ausbildet. Des Weiteren verfügt das Gehäuse 8 über einen Stator 10, der (hier über eine Schraube 11) fest an dem Gehäuseteil 9 gehalten ist.

Der Stator 10 hat grundsätzlich (bei der Ausrichtung des Prüfmaschinen-Einspannkopfes 1 gemäß Fig. 3 und in diesem Längsschnitt) die Form eines umgekehrten T. Das T des Stators 10 weist einen Vertikalschenkel 12 sowie zwei Querschenkel 13, 14 auf. Im Bereich der von den Querschenkeln 13, 14 gebildeten Stirnseite verfügt der Stator 10 über eine hier zylindrische Ausnehmung 15, in welcher ein Gleitkörper 16, insbesondere eine kreisscheibenförmige Gleitplatte, aufgenommen und gehalten ist. Die dem Stator 10 abgewandte Stirnseite des Gleitkörpers 16 steht gegenüber den Querschenkeln 13, 14 hervor. Der Gleitkörper 16 verfügt über eine Ausnehmung 17, die hier als Durchgangsbohrung ausgebildet ist, die parallel zu einer Längsachse 18 des Prüfmaschinen-Einspannkopfes 1 orientiert ist. In der Ausnehmung 17 ist ein Permanentmagnet 19 aufgenommen und fixiert.

An dem Stator 10 ist (relativ zu diesem entlang der Längsachse 18 verschieblich) ein Aktuatorkörper20 geführt. Der Aktuatorkörper20 verfügt über einen Kolbenkörper21 und einen Spannkörper22. Der Kolbenkörper21 und der Spannkörper22 sind über Passstifte 23 sowie Befestigungsschrauben 24 fest miteinander verbunden. Der Aktuatorkörper20 verfügt über einen U-förmigen Teillängsschnitt, wobei in Fig. 3 das U auf dem Kopf stehend orientiert ist mit einem obenliegenden Grundschenkel 25, der von dem Kolbenkörper 21 gebildet ist, und Seitenschenkeln 26, 27, die von dem Spannkörper22 gebildet sind.

Zwischen dem Stator 10 und dem Aktuatorkörper20 ist eine hier hohlzylindrische Druckkammer 28 ausgebildet. Die Druckkammer 28 ist wie dargestellt über zwischen dem Stator 10 und dem Aktuatorkörper 20 wirkende Dichtelemente, insbesondere O-Ringe, abgedichtet. Die Drucckammer 28 ist über einen Hydraulikkanal 29 mit einem Hydraulikanschluss 30 verbunden. Der Hydraulikkanal 29 erstreckt sich von dem Hydraulikanschluss 30 durch das Gehäuseteil 9 bis zu einem Kontaktbereich zwischen dem Gehäuseteil 9 und dem Stator 10, im Bereich dessen ein Dichtelement angeordnet ist, und durch den Stator 10 zu der Druckkammer 28. Die Druckkammer 28 ist radial nach außen begrenzt durch eine zylindrische Mantelfläche, die von der Innenfläche des Spannkörpers 22 im Bereich der Seitenschenkel 26, 27 gebildet ist. Des Weiteren ist die Druckkammer 28 begrenzt in Löserichtung durch eine von den Querschenkeln 13, 14 des Stators 10 ausgebildete Ringfläche. Radial innenliegend ist die Druckkammer 28 begrenzt durch eine zylindrische Mantelfläche des Vertikalschenkels 12 des Stators 10, in welche der Hydraulickanal 29 mündet. Schließlich ist die Druckkammer 28 in Spannrichtung begrenzt durch eine ringförmige Kolbenfläche 31, die von dem Kolbenkörper 21 im Bereich des Grundschenkels 25 ausgebildet ist. Mit einer Druckbeaufschlagung der Druckkammer28 und der Wirkung des Hydraulikdrucks an der Kolbenfläche 31 kann eine Erzeugung einer Betätigungskraft erfolgen, die in Betätigungsrichtung (in Fig. 3 in Richtung der Längsachse 18 nach oben) auf den Aktuatorkörper 20 wirkt. Der Vertikalschenkel 12 des Stators 10 erstreckt sich unter Abdichtung durch eine Bohrung 32 des Kolbenkörpers 21 und des Grundschenkels 25.

Bei Ausrichtung des Prüfmaschinen-Einspannkopfes 1 gemäß Fig. 3 ist der Aktuatorkörper 20 in dem rechten Halblängsschnitt in grober Näherung entsprechend einem liegenden U ausgebildet mit einem Grundschenkel 33 (der dem Seitenschenkel 27 entspricht) und sich hiervon nach links erstreckenden Seitenschenkeln 34, 35 gebildet. Hierbei wird der Seitenschenkel 34 von dem Material des Kolbenkörpers 21 abseits der Bohrung 32 gebildet. Die innenliegenden Stirnseiten der Seitenschenkel 34, 35 haben dabei einen geringeren Abstand von der Längsachse 18 als die Stirnseiten der Querschenkel 13, 14 des Stators 10, womit der Aktuatorkörper 20 die Querschenkel 13, 14 des Stators 20 umgreift und die Querschenkel 13, 14 zwischen den Seitenschenkeln 34, 35 des Aktuatorkörpers in Richtung der Längsachse 18 gefangen sind.

Der Aktuatorkörper20 bildet im Bereich des Seitenschenkels 35 Innenkeilflächen 36, 37 aus. Für das dargestellte Ausführungsbeispiel sind die Innenkeilflächen 36, 37 eben ausgebildet mit einer gradlinigen Erstreckung vertikal zur Zeichenebene gemäß Fig. 3. Um lediglich ein Beispiel zu nennen, kann ein Keilwinkel der Innenkeilflächen 36, 37 gegenüber der Längsachse 18 im Bereich von 5° bis 30°, vorzugsweise 10° bis 20°, liegen.

Die Spannbacken 3, 4 liegen mit ihren Stirnseiten an dem Gleitkörper 16 an und werden mittels des Permanentmagneten 19 an diesen angezogen und an diesem gehalten. Die Spannbacken 3, 4 verfügen jeweils über eine Außenkeilfläche 38, 39, deren Keilwinkel dem Keilwinkel der Innenkeilflächen 36, 37 entspricht. Die Spannbacken 3, 4 liegen mit ihren Außenkeilflächen 38, 39 flächig an den Innenkeilflächen 36, 37 des Aktuatorkörpers 20 an.

Wird durch die hydraulische Beaufschlagung der Druckkammer 28 der Aktuatorkörper 20 in Betätigungsrichtung (in Fig. 3 entlang der Längsachse 18 nach oben) bewegt, kommt es zu einer relativen Gleitbewegung der Spannbacken 3, 4 im Bereich der Außenkeilflächen 38, 39 relativ zu den Innenkeilflächen 36, 37 des Aktuatorkörpers 20. Diese Gleitbewegung geht einher mit einer Bewegung der Spannbacken quer zur Längsachse 18 in Richtung der Längsachse 18, womit die Breite der Aufnahme 2 verringert wird. Befindet sich in der Aufnahme 2 eine Probe, wird über die von der Betätigungskraft erzeugte Spannkraft die Probe zwischen den Spannbacken 3, 4 eingespannt.

Der Prüfmaschinen-Einspannkopf 1 verfügt über eine Sicherungsmutter 40, bei der es sich vorzugsweise um eine Überwurfmutter handelt. Für das dargestellte Ausführungsbeispiel ist die Sicherungsmutter 40 mit einem Außengewinde 41 des Gehäuseteils 9 verschraubt. Die Sicherungsmutter 40 verfügt bei Ausbildung als Überwurfmutter über einen nach innen orientierten Kragen 42. Mit dem Aufschrauben der Sicherungsmutter 40 auf das Außengewinde 41 des Gehäuseteils 9 kommt der Kragen 42 zur Anlage an einen radial nach außen orientierten Bund 43 des Aktuatorkörpers 20, hier des Spannkörpers 22. Durch einen derartigen Kontakt kann mechanisch die Betriebsstellung des Aktuatorkörpers 20 gesichert werden und eine zuvor mittels hydraulischer Beaufschlagung der Druckkammer 28 erzeugte Spannkraft (zumindest teilweise) aufrechterhalten werden, auch wenn der Druck in der Druckkammer 28 reduziert wird. Zusätzlich kann, wie in Fig. 3 dargestellt ist, der Schraubwinkel der Sicherungsmutter 40 über eine Sicherungs- oder Kontermutter 44 gesichert sein, die ebenfalls mit einem Außengewinde des Aktuatorkörpers 20, hier des Spannkörpers 22, verschraubt ist und gegen die Sicherungsmutter 40 angezogen oder gekontert ist.

Optional möglich ist, dass der Aktuatorkörper 20 über mindestens eine Feder 45 in Löserichtung beaufschlagt ist. Für das dargestellte Ausführungsbeispiel ist ein Federfußpunkt der Feder 45 an dem Gehäuseteil 9 abgestützt, während der andere Federfußpunkt der Feder 45 an dem Kolbenkörper 21 abgestützt ist.

Eine Verwendung von Prüfmaschinen-Einspannköpfen gemäß den Fig. 1 bis 3 in einer Prüfmaschine kann wie folgt erfolgen:
Zunächst werden die Aufnahmen 2 der Prüfmaschinen-Einspannköpfe 1 fluchtend zueinander angeordnet, sodass in diese die Probe einbringbar ist. Zu diesem Zweck können die Spannbacken 3, 4 oder der Aktuatorkörper 20, hier der Spannkörper 22, Ausrichtelemente 46, 47 aufweisen. Durch Eingriff eines Werkzeugs in mindestens ein Ausrichtelement 46, 47 kann eine Verdrehung des Aktuatorkörper 20 um die Längsachse 18 und/oder eine Relativbewegung der Spannbacken 3, 4 gegenüber dem Aktuatorkörper 20 herbeigeführt werden.

Ist die Probe in die Aufnahmen 2 der Prüfmaschinen-Einspannköpfe 1 eingebracht, erfolgt die hydraulische Beaufschlagung der Druckkammer28 durch die Verbindung des Hydraulikanschlusses 30 mit einer Druckquelle. Diese hydraulische Beaufschlagung führt dazu, dass an der Kolbenfläche 31 eine Betätigungskraft erzeugt wird, mit welcher der Aktuatorkörper 20 in Betätigungs- und Spannrichtung (in Fig. 3 entlang der Längsachse 18 nach oben) beaufschlagt wird. Die Beaufschlagung und die Bewegung des Aktuatorkörpers 20 hat zur Folge, dass die Spannbacken 3, 4 mit den Außenkeilflächen 38, 39 entlang der Innenkeilflächen 36, 37 des Aktuatorkörpers 20 gleiten, womit ein Einspannen der Probe zwischen den Spannbacken 3, 4 mit der Spannkraft erfolgt. Hieran anschließend wird die Sicherungsmutter 40 (bei immer noch vorhandenem Hydraulikdruck in der Druckkammer28) angezogen, bis die infolge der Betätigungskraft zuvor herbeigeführte Stellung des Aktuatorkörpers 20 durch den Kontakt zwischen dem Kragen 42 und dem Bund 43 gesichert ist und die Spannkraft gesichert ist. In dieser Sicherungsstellung der Sicherungsmutter 40 kann dann der Hydraulikdruck in der Druckkammer 28 beseitigt werden. Hieran anschließend erfolgt dann die Durchführung der Prüfung der Probe durch Aufbringung der statischen oder dynamischen Prüflast mittels eines geeigneten Aktuators. Optional kann die zusätzliche Sicherung durch die Kontermutter44 erfolgen. Möglich ist, dass die Sicherungsmutter 40 und/oder die Kontermutter 44 Eingriffsflächen 48, 49 aufweist, über welche mittels eines Werkzeugs ein Anzugsmoment bzw. Lösemoment auf die Sicherungsmutter 40 und die Kontermutter 44 aufgebracht werden kann.

Für das dargestellte Ausführungsbeispiel ist eine hydraulische Spanneinrichtung 50 mit dem Stator 10, dem Aktuator20 der Druckkammer 28, dem Hydraulikkanal 29 und dem Hydraulikanschluss 30 gebildet. Eine mechanische Sicherungseinrichtung 51 ist mit der Sicherungsmutter 40 und dem Kontakt zwischen dem Kragen 42 und dem Bund 43 gebildet, wobei auch die Kontermutter44 Bestandteil der mechanischen Sicherheitseinrichtung 51 sein kann.

### BEZUGSZEICHENLISTE

- 1: Prüfmaschinen-Einspannkopf
- 2: Aufnahme
- 3: Spannbacke
- 4: Spannbacke
- 5: Spannfläche
- 6: Spannfläche
- 7: Befestigungsbereich
- 8: Gehäuse
- 9: Gehäuseteil
- 10: Stator
- 11: Schraube
- 12: Vertikalschenkel
- 13: Querschenkel
- 14: Querschenkel
- 15: Ausnehmung
- 16: Gleitkörper
- 17: Ausnehmung
- 18: Längsachse
- 19: Permanentmagnet
- 20: Aktuatorkörper
- 21: Kolbenkörper
- 22: Spannkörper
- 23: Passstift
- 24: Befestigungsschraube
- 25: Grundschenkel
- 26: Seitenschenkel
- 27: Seitenschenkel
- 28: Druckkammer
- 29: Hydraulikkanal
- 30: Hydraulikanschluss
- 31: Kolbenfläche
- 32: Bohrung
- 33: Grundschenkel
- 34: Seitenschenkel
- 35: Seitenschenkel
- 36: Innenkeilfläche
- 37: Innenkeilfläche
- 38: Außenkeilfläche
- 39: Außenkeilfläche
- 40: Sicherungsmutter
- 41: Außengewinde
- 42: Kragen
- 43: Bund
- 44: Kontermutter
- 45: Feder
- 46: Ausrichtelement
- 47: Ausrichtelement
- 48: Eingriffsfläche
- 49: Eingriffsfläche
- 50: hydraulische Spanneinrichtung
- 51: mechanische Sicherungseinrichtung

## Patentansprüche

1. Prüfmaschinen-Einspannkopf (1) zum Einspannen einer mit einer statischen und/oder einer dynamischen Prüflast zu beaufschlagenden Probe mit
a) mindestens zwei Spannbacken (3, 4), zwischen denen die zu prüfende Probe mit einer Einspannkraft eingespannt wird,
b) einer hydraulischen Spanneinrichtung (50), die mittels eines Hydraulikdrucks eine Betätigungskraft erzeugt, welche die Spannkraft an den Spannbacken (3, 4) hervorruft, **dadurch gekennzeichnet, dass** der Prüfmaschinen-Einspannkopf eine mechanische Sicherungseinrichtung (51) aufweist, welche die Spannkraft teilweise oder vollständig aufrechterhält, wenn der Hydraulikdruck in der hydraulischen Spanneinrichtung (50) reduziert oder beseitigt wird.

2. Prüfmaschinen-Einspannkopf (1) nach Anspruch 1, **dadurch gekennzeichnet, dass**
a) die Spannbacken (3, 4) Außenkeilflächen (38, 39) aufweisen,
b) ein von dem Hydraulikdruck betätigter Aktuatorkörper (20) Innenkeilflächen (36, 37) aufweist,
c) die Außenkeilflächen (38, 39) der Spannbacken (3, 4) jeweils an einer zugeordneten Innenkeilflächen (36, 37) des Aktuatorkörpers (20) anliegen,
d) die Betätigungskraft gleitende Relativbewegungen zwischen den Außenkeilflächen (38, 39) und den Innenkeilflächen (36, 37) herbeiführt, welche zu einer Verringerung des Abstandes von Spannflächen (5, 6) der Spannbacken (3, 4) und/oder zu einer Erhöhung der Spannkraft, mit der Spannflächen (5, 6) der Spannbacken (3, 4) die Probe spannen, führen.

3. Prüfmaschinen-Einspannkopf (1) nach Anspruch 2, **dadurch gekennzeichnet, dass** der Aktuatorkörper (20) über eine Feder (45) in Richtung einer Lösestellung beaufschlagt ist.

4. Prüfmaschinen-Einspannkopf (1) nach einem der vorhergehenden Ansprüche, **dadurch gekennzeichnet, dass** die hydraulische Spanneinrichtung (50) eine Druckkammer (28) aufweist, die von einer Kolbenfläche (31) des Aktuatorkörpers (20) und einem Stator (10) begrenzt ist, wobei der Aktuatorkörper (20) relativ zu dem Stator (10) beweglich ist und eine Bewegung des Aktuatorkörpers (20) relativ zu dem Stator (10) eine Veränderung des Volumens der Drucckammer (28) zur Folge hat.

5. Prüfmaschinen-Einspannkopf (1) nach Anspruch 4, **dadurch gekennzeichnet, dass**
a) das Stator (10) einen T-förmigen Längsschnitt mit einem Vertikalschenkel (12) und zwei Querschenkeln (13, 14) aufweist,
b) der Aktuatorkörper (20) einen U-förmigen Längsschnitt mit einem Grundschenkel (25) und zwei Seitenschenkeln (26, 27) aufweist,
c) der Vertikalschenkel (12) des T unter Abdichtung in einer Bohrung (32) des Grundschenkels (25) des U beweglich geführt ist,
d) die Stirnseiten der Querschenkel (13, 14) des T unter Abdichtung beweglich durch die Seitenschenkel (26, 27) des U geführt sind und
e) die Druckkammer (28) hohlzylinderförmig ausgebildet ist und
ea) radial innen durch eine zylindrische Mantelfläche des Vertikalschenkels (12) des T,
eb) radial außen durch eine von Seitenschenkeln (26, 27) des U definierte zylindrische Mantelfläche,
ec) in eine axiale Richtung durch die Kolbenfläche (31), die von dem Grundschenkel (25) des U definiert ist, und
ed) in die andere axiale Richtung durch eine Ringfläche, die durch die Querschenkel (13, 14) des T definiert ist,
begrenzt ist.

6. Prüfmaschinen-Einspannkopf (1) nach einem der vorhergehenden Ansprüche, **dadurch gekennzeichnet, dass** der Aktuatorkörper (20) einen Kolbenkörper (21) und einen Spannkörper (22) aufweist.

7. Prüfmaschinen-Einspannkopf (1) nach Anspruch 6 in Rückbeziehung auf Anspruch 5, **dadurch gekennzeichnet, dass** der Aktuatorkörper (20) in einem Halblängsschnitt einen Querschenkel (13, 14) des T des Stators (10) U-förmig umgreift.

8. Prüfmaschinen-Einspannkopf (1) nach einem der vorhergehenden Ansprüche, **dadurch gekennzeichnet, dass** die Spannbacken (3, 4) in Richtung einer Längsachse (18) über einen Gleitkörper (16) an einem Gehäuseteil (9) abgestützt sind.

9. Prüfmaschinen-Einspannkopf (1) nach Anspruch 8, **dadurch gekennzeichnet, dass** der Gleitkörper (16) einen Permanentmagneten (19) aufweist.

10. Prüfmaschinen-Einspannkopf (1) nach einem der vorhergehenden Ansprüche, **dadurch gekennzeichnet, dass** der Aktuatorkörper (20) und/oder die Spannbacken (3, 4) mindestens ein Ausrichtelement (46; 47) aufweisen.

11. Prüfmaschinen-Einspannkopf (1) nach einem der vorhergehenden Ansprüche, **dadurch gekennzeichnet, dass** die mechanische Sicherungseinrichtung (51) eine Sicherungsmutter (40) aufweist, welche in einer Sicherungs-Schraubstellung eine mittels der hydraulischen Spanneinrichtung (50) herbeigeführte spannende Position eines oder des Aktuatorkörpers (20) oder der Spannbacken (3, 4) sichert.

12. Prüfmaschinen-Einspannkopf (1) nach Anspruch 11, **dadurch gekennzeichnet, dass** die Sicherungs-Schraubstellung der Sicherungsmutter (40) über eine Wellen- oder Kontermutter (44) gesichert ist.

13. Verfahren zum Prüfen einer Probe mit einer statischen und/oder dynamischen Prüflast mittels einer Prüfmaschine, die zwei Prüfmaschinen-Einspannköpfe (1) nach einem der Ansprüche 1 bis 12 aufweist, in welchen jeweils ein Endbereich der Probe einspannbar ist, und einen Prüfaktuator aufweist, mittels dessen die statischen und/oder dynamische Prüflast erzeugt wird,
mit den folgenden Verfahrensschritten:
a) Einführen der Endbereiche der Probe in Aufnahmen (2) der Prüfmaschinen-Einspannköpfe (1);
b) Beaufschlagen der hydraulischen Spanneinrichtung (50) mit einem Hydraulikdruck und Erzeugung der Spannkraft, mit der die Spannbacken (3, 4) der Prüfmaschinen-Einspannköpfe (1) die Endbereiche der Probe einspannen;
c) Betätigung der mechanischen Sicherungseinrichtung (51),
d) Durchführung der Prüfung durch Betrieb des Prüfaktuators zur Erzeugung der statischen und/oder einer dynamischen Prüflast.

14. Prüfmaschine mit zwei Prüfmaschinen-Einspannköpfen (1) nach einem der Ansprüche 1 bis 12, in welchen jeweils ein Endbereich der Probe einspannbar ist, und einem Prüfaktuator, mittels dessen die statischen und/oder dynamische Prüflast erzeugt wird.

## Claims

1. Testing machine clamping head (1) for clamping a specimen biased by a static and/or dynamic testing load comprising
a) at least two clamping jaws (3, 4) between which the specimen which is to be tested can be clamped by a clamping force,
b) a hydraulic clamping device (50) which by means of a hydraulic pressure generates an actuating force which causes the clamping force at the clamping jaws (3, 4),
**characterized in that** the testing machine clamping head comprises a mechanical securing device (51) which partially or completely maintains the clamping force when the hydraulic pressure in the hydraulic clamping device (50) is reduced or removed.

2. Testing machine clamping head (1) of claim 1, **characterized in that**
a) the clamping jaws (3, 4) comprise outer wedge surfaces (38, 39),
b) an actuator body (20) actuated by the hydraulic pressure comprises inner wedge surfaces (36, 37),
c) the outer wedge surfaces (38, 39) of the clamping jaws (3, 4) each contact an associated inner wedge surface (36, 37) of the actuator body (20),
d) the actuation force induces sliding relative movements between the outer wedge surfaces (38, 39) and the inner wedge surfaces (36, 37) which lead to a reduction of the distance of clamping surfaces (5, 6) of the clamping jaws (3, 4) and/or an increase of the clamping force by which clamping surfaces (5, 6) of the clamping jaws (3, 4) clamp the specimen.

3. Testing machine clamping head (1) of claim 2, **characterized in that** the actuator body (20) is biased by a spring (45) towards a release position.

4. Testing machine clamping head (1) of one of the preceding claims, **characterized in that** the hydraulic clamping device (50) comprises a pressure chamber (28) which is limited by a piston surface (31) of the actuator body (20) and a stator (10), wherein the actuator body (20) is movable relatively to the stator (10) and a movement of the actuator body (20) relative to the stator (10) leads to a change of the volume of the pressure chamber (28).

5. Testing machine clamping head (1) of claim 4, **characterized in that**
a) the stator (10) comprises a T-shaped longitudinal section with a vertical leg (12) and two transverse legs (13, 14),
b) the actuator body (20) comprises an U-shaped longitudinal section comprising a base leg (25) and two side legs (26, 27),
c) the vertical leg (12) of the T is guided for being moved under the provision of a sealing effect in a bore (32) of the base leg (25) of the U,
d) the front sides of the transverse legs (13, 14) of the T are guided for being moved under the provision of a sealing effect by the side legs (26, 27) of the U and
e) the pressure chamber (28) has a hollow cylindrical shape and is limited
ea) on the radial radial inner side by a cylindrical circumferential surface of the vertical leg (12) of the T,
eb) on the radial outer side by a cylindrical circumferential surface defined by side legs (26, 27) of the U,
ec) in one axial direction by the piston surface (31) which is defined by the base leg (25) of the U and
ed) in the other axial direction by a ring surface which is defined by the transverse legs (13, 14) of the T.

6. Testing machine clamping head (1) of one of the preceding claims, **characterized in that** the actuator body (20) comprises a piston body (21) and a clamping body (22).

7. Testing machine clamping head (1) of claim 6 when referring back to claim 5, **characterized in that** the actuator body (20) in a semi longitudinal section encompasses in an U-shaped fashion one transverse leg (13, 14) of the T of the stator (10)

8. Testing machine clamping head (1) of one of the preceding claims, **characterized in that** the clamping jaws (3, 4) are supported in the direction of a longitudinal axis (18) by a sliding body (16) on a housing part (9).

9. Testing machine clamping head (1) of claim 8, **characterized in that** the sliding body (16) comprises a permanent magnet (19).

10. Testing machine clamping head (1) of one of the preceding claims, **characterized in that** the actuator body (20) and/or the clamping jaws (3, 4) comprise at least one orienting element (46; 47).

11. Testing machine clamping head (1) of one of the preceding claims, **characterized in that** the mechanical securing device (51) comprises a securing nut (49) which in a securing screwed position secures a clamping position of a or the actuator body (20) or of the clamping jaws (3, 4) which has been induced by the hydraulic clamping device (50)

12. Testing machine clamping head (1) of claim 11, **characterized in that** the securing screwed position of the securing nut (40) is secured by a shaft nut, locknut or counter nut (44).

13. Method for testing a specimen with a static and/or dynamic testing load by use of a testing machine which comprises two testing machine clamping heads (1) of one of claims 1 to 12 wherein a respective end portion of the specimen can be clamped, and which comprises a testing actuator which serves for generating a static and/or dynamic testing load, the method comprising the following method steps:
a) inserting the end portion of the specimen into accommodations (2) of the testing machine clamping heads (1);
b) biasing the hydraulic clamping device (50) with a hydraulic pressure and generating the clamping force by which the clamping jaws (3, 4) of the testing machine clamping heads (1) clamp the end portions of the probe;
c) actuating the mechanical securing device (51),
d) performing the testing by operating the testing actuator for generating the static and/or a dynamic testing load.

14. Testing machine comprising two testing machine clamping heads (1) of one of claims 1 to 12 wherein a respective end portion of the specimen can be clamped, and comprising a testing actuator which generates the static and/or dynamic testing load.

## Revendications

1. Tête de serrage de machine d'essai (1) pour le serrage d'un échantillon à solliciter avec une charge d'essai statique et/ou dynamique, avec
a) au moins deux mâchoires de serrage (3, 4) entre lesquelles l'échantillon à tester est serré avec une force de serrage,
b) un dispositif de serrage hydraulique (50) qui génère, au moyen d'une pression hydraulique, une force d'actionnement qui produit la force de serrage au niveau des mâchoires de serrage (3, 4),
**caractérisée en ce que** la tête de serrage de machine d'essai comprend un dispositif de sécurisation mécanique (51) qui maintient la force de serrage partiellement ou entièrement lorsque la pression hydraulique dans le dispositif de serrage hydraulique (50) est réduite ou supprimée.

2. Tête de serrage de machine d'essai (1) selon la revendication 1, **caractérisée en ce que**
a) les mâchoires de serrage (3, 4) présentent des surfaces de calage externes (38, 39),
b) un corps d'actionneur (20) actionné par la pression hydraulique comprend des surfaces de calage internes (36, 37),
c) les surfaces de calage externes (38, 39) des mâchoires de serrage (3, 4) s'appuient chacune contre une surface de calage interne (36, 37) du corps d'actionneur (20),
d) la force d'actionnement génère des mouvements relatifs glissants entre les surfaces de calage externes (38, 39) et les surfaces de calage internes (36, 37), qui provoquent une réduction de la distance entre les surfaces de serrage (5, 6) des mâchoires de serrage (3, 4) et/ou une augmentation de la force de serrage avec laquelle les surface de serrage (5, 6) des mâchoires de serrage (3, 4) serrant l'échantillon.

3. Tête de serrage de machine d'essai (1) selon la revendication 2, **caractérisée en ce que** le corps d'actionneur (20) est sollicité, par l'intermédiaire d'un ressort (45), en direction d'une position de relâchement.

4. Tête de serrage de machine d'essai (1) selon l'une des revendications précédentes, **caractérisée en ce que** le dispositif de serrage hydraulique (50) comprend une chambre de pression (28) qui est délimitée par une surface de piston (31) du corps d'actionneur (20) et un stator (10), dans lequel le corps d'actionneur (20) est mobile par rapport au stator (10) et un mouvement du corps d'actionneur (20) par rapport au stator (10) provoque une modification du volume de la chambre de pression (28).

5. Tête de serrage de machine d'essai (1) selon la revendication 4, **caractérisée en ce que**
a) le stator (10) présente une section longitudinale en forme de T avec un montant vertical (12) et deux montants transversaux (13, 14),
b) le corps d'actionneur (20) présente une section longitudinale en forme de U avec un montant de base (25) et deux montants latéraux (26, 27),
c) le montant vertical (12) du T est guidé de manière mobile, avec une étanchéité, dans un alésage (32) du montant de base (25) du U,
d) les faces frontales des montants transversaux (13, 14) du T sont guidés de manière mobile, avec une étanchéité, à travers les montants latéraux (26, 27) du U et
e) la chambre de pression (28) présente la forme d'un cylindre creux et est délimitée
ea) radialement à l'intérieur par une surface d'enveloppe cylindrique du montant vertical (12) du T,
eb) radialement à l'extérieur par une surface d'enveloppe cylindrique définie par les montants latéraux (26, 27) du U,
ec) dans une direction axiale, par la surface de piston (31) qui est définie par le montant de base (25) du U et
ed) dans l'autre direction axiale, par une surface annulaire qui est définie par les montants transversaux (13, 14) et T.

6. Tête de serrage de machine d'essai (1) selon l'une des revendications précédentes, **caractérisée en ce que** le corps d'actionneur (20) comprend un corps de piston (21) et un corps de serrage (22).

7. Tête de serrage de machine d'essai (1) selon la revendication 6, en référence à la revendication 5, **caractérisée en ce que** le corps d'actionneur (20) entoure en forme de U, dans une section semi-longitudinale, un montant transversal (13, 14) du T du stator (10).

8. Tête de serrage de machine d'essai (1) selon l'une des revendications précédentes, **caractérisée en ce que** les mâchoires de serrage (3, 4) sont appuyées, en direction d'un axe longitudinal (18), par l'intermédiaire d'un corps glissant (16), contre une partie de boîtier (9).

9. Tête de serrage de machine d'essai (1) selon la revendication 8, **caractérisée en ce que** le corps glissant (16) comprend un aimant permanent (19).

10. Tête de serrage de machine d'essai (1) selon l'une des revendications précédentes, **caractérisée en ce que** le corps d'actionneur (20) et/ou les mâchoires de serrage (3, 4) comprennent au moins un élément d'orientation (46 ; 47).

11. Tête de serrage de machine d'essai (1) selon l'une des revendications précédentes, **caractérisée en ce que** le dispositif de serrage mécanique (51) comprend un écrou de blocage (40) qui, dans une position de vissage de blocage, sécurise une position de serrage, provoquée au moyen du dispositif de serrage (50), d'un ou du corps d'actionneur (20) ou des mâchoires de serrage (3, 4).

12. Tête de serrage de machine d'essai (1) selon la revendication 11, **caractérisée en ce que** la position de vissage de blocage de l'écrou de blocage (40) est sécurisée par l'intermédiaire d'un écrou d'arbre ou d'un contre-écrou (44).

13. Procédé de test d'un échantillon avec une charge d'essai statique et/ou dynamique au moyen d'une machine d'essai, qui comprend deux têtes de serrage de machine d'essai (1) selon l'une des revendications 1 à 12, dans lesquelles respectivement une partie d'extrémité de l'échantillon peut être serrée, et comprend un actionneur d'essai au moyen duquel la charge d'essai statique et/ou dynamique est générée,
avec les étapes suivantes :
a) introduction des parties d'extrémité de l'échantillon dans des logements (2) des têtes de serrage de machine d'essai (1) ;
b) alimentation du dispositif de serrage hydraulique (50) avec une pression hydraulique et production de la force de serrage avec laquelle les mâchoires de serrage (3, 4) des têtes de serrage de machine d'essai (1) serrent les parties d'extrémité de l'échantillon ;
c) actionnement du dispositif de sécurisation mécanique (51),
d) réalisation de l'essai par le fonctionnement de l'actionneur d'essai afin de générer la charge d'essai statique et/ou dynamique.

14. Machine d'essai avec deux têtes de serrage de machine d'essai (1) selon l'une des revendications 1 à 12, dans lesquelles respectivement un échantillon est serré, et un actionneur d'essai au moyen duquel la charge d'essai statique et/ou dynamique est générée.
